# EUROPEAN PATENT SPECIFICATION

(11) **EP 1 088 504 B1**
(45) Date of publication and mention of the grant of the patent: **22.09.2004**
(21) Application number: 00203301.7
(22) Date of filing: 26.09.2000
(51) Int. Cl.: A47J 31/40

(54) **Automatic cupped drinks dispenser and its method of operation**
Automat zum Verteilen von Getränken in Becher und Verfahren zum Betreiben desselben
Machine automatique pour distribuer des boissons dans des gobelets et méthode pour la commander

(30) Priority: 29.09.1999 IT RE990097
(43) Date of publication of application: 04.04.2001
(73) Proprietor: Ducale Macchine da Caffe' di Sandei Ugo E.C. S.N.C., 43100 Parma (IT)
(72) Inventor: Sandei, Pietro, c/o Ducale Macchine Da Caffe', 43100 Parma (IT); Sandei, Ugo, c/o Ducale Macchine Da Caffe', 43100 Parma (IT); Sandei, Stefano, c/o Ducale Macchine Da Caffe', 43100 Parma (IT)
(74) Representative: Corradini, Corrado

(56) References cited:
- EP-A- 0 251 960
- EP-A- 0 303 881
- EP-A- 0 373 126
- DE-A- 3 046 157

## Description

This invention relates to automatic dispensers for cupped drinks, such as coffee, milk, chocolate, tea, syrups, soup and other drinks.

Cupped drinks dispensers have been known for some time, comprising a plurality of delivery stations each containing a component in powder form or the like, ie of small particle size (usually a freeze-dried product or the like) which can be mixed with a liquid component (usually water) to form together therewith the required drink. This component in powder form is released into a cup after being mixed with the liquid component in a mixing device applied to and dedicated to that particular station. The material is fed into the mixing device, into which water is also fed, and the two components are mixed together by a rotating bladed means or the like, until the powder substance dissolves. The liquid mixture obtained in this manner is finally fed into the cup.

A drawback of said machines is the difficulty of periodically cleaning, as required by proper hygiene, all those machine parts which come into contact with the drink, in particular the mixing device, which to be cleaned has to be removed and cleaned separately by hand. All this is aggravated by the fact that a separate mixing device is provided for each different powder substance.

Another drawback is that said mixing devices are relatively costly.

In EP-A-0251960 an automatic drink dispenser is shown which overcomes said and other drawbacks. That dispenser comprises:
a plurality of delivery stations provided with vessels containing respective component materials in powder form or the like, soluble in a liquid component, each station being arranged to deliver the respective component material in the powder state;
an automatic control unit which automatically controls emission of the powder components;
a mixing station having a means for delivering the liquid component in the form of a jet emitted under pressure through at least one downwardly directed exit hole;
a cup handling device comprising a gripping member for gripping a cup, and means for moving said gripping member.
Similar features are shown in EP-A-0 303881 and EP-A-0373126.

An object of the present invention is to cause, during the mixing of the powder component, a light froth to form, rendering the appearance of the drink more attractive and its taste more pleasant.
This and further objects are attained by the invention as characterised in the claims.

The invention is described in detail hereinafter with the aid of the accompanying figures which illustrate a non-limiting embodiment thereof by way of example.

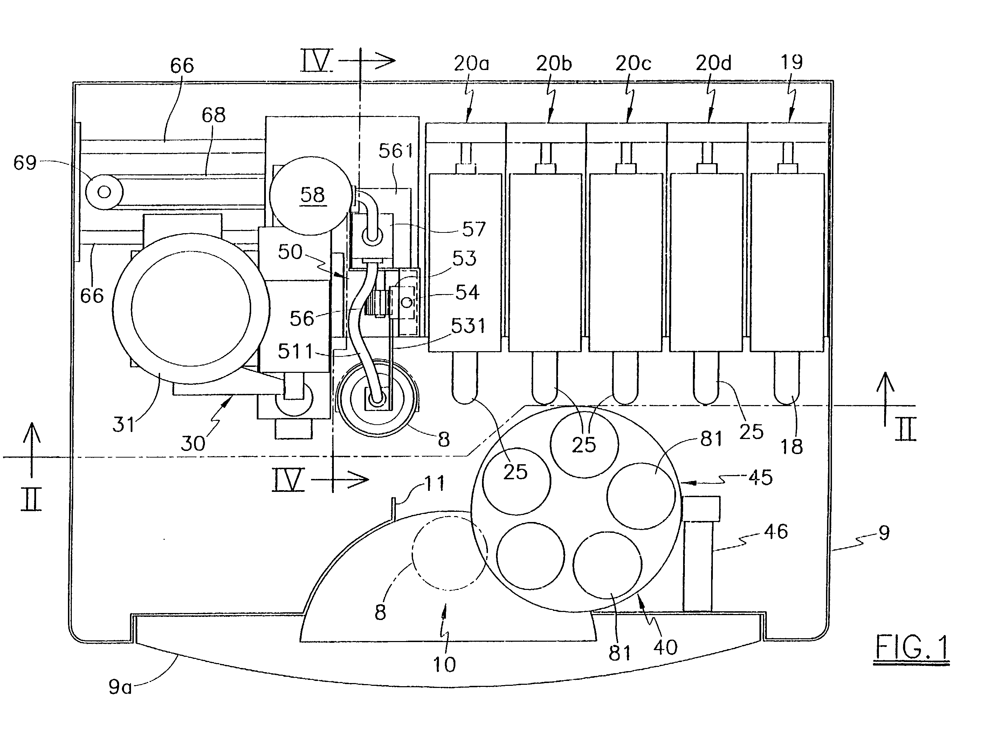

Figure 1 is a plan view from above showing the members positioned within the dispenser.

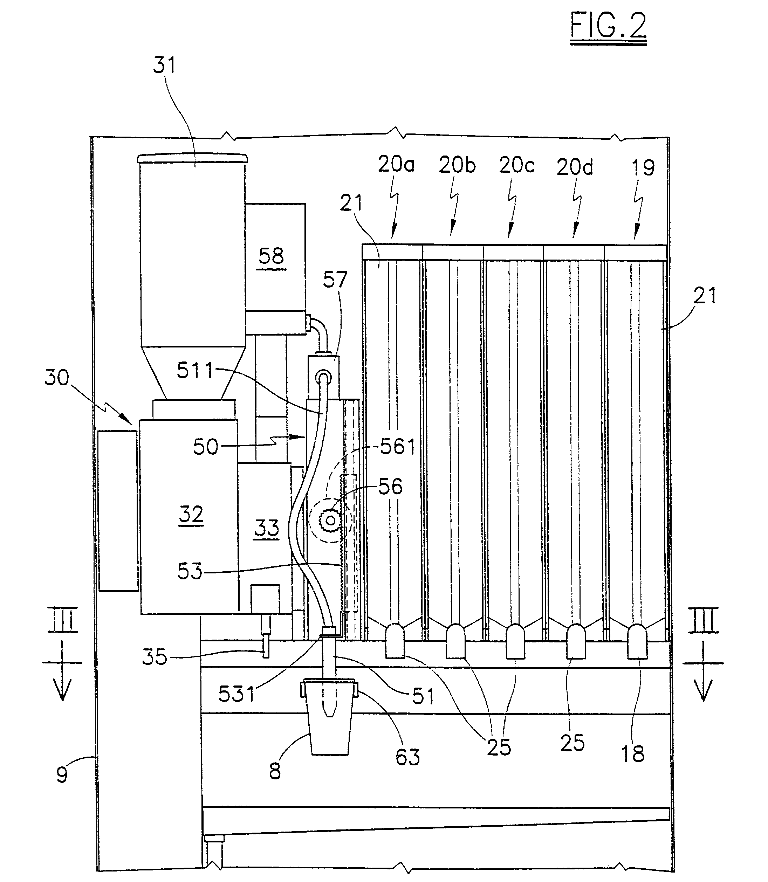

Figure 2 is a section on the vertical plane II-II of Figure 1.
Figure 3 is a section on the horizontal plane III-III of Figure 2.
Figure 4 is a section on the plane IV-IV of Figure 1.
Figures 4A, 4D and 4C show the device 60 of Figure 4 in different positions.

The present invention is particularly suitable for application to an automatic dispenser of the type illustrated in patent application No. RE98A000039, filed on 15.04.1998 by the same Applicant.

The dispenser of the invention comprises an outer casing 9 enclosing within its interior substantially all the members of the dispenser, to conceal them and isolate them from the external environment. The drink is prepared within the casing 9 in a cup which is finally brought into a user release location 10 which is provided in the front wall of the casing 9 and is open outwards (so that the user can take the drink with his hand), and communicating with the casing interior via a window 11.

Inside the casing 9 there is provided at least one plurality of delivery stations (indicated by 20a, 20b, 20c and 20d) provided with vessels containing respective components in powder form or the like, soluble in a liquid component, each station being able to deliver the respective component material in the powder state.

In the embodiment shown in the figures, said stations 20a, 20b, 20c and 20d are structurally identical, and are arranged to contain different substances in powder form, typically freeze-dried products (coffee, milk, chocolate, tea, orangeade, lemonade, etc.) able to form a respective drink on mixing with a liquid component (typically water, but can also be another liquid, for example milk).

Specifically, each of said stations 20a, 20b, 20c and 20d comprises a vessel 21 able to contain a quantity of substance in powder form. On the base of each vessel 21 there are positioned metering means, for example of screw type (of known type, not shown in the figures), arranged to emit on command a predetermined measured quantity of material in powder form, which leaves through an exit spout 25.

A station 19 with relative exit spout 18 and structurally identical to the preceding stations can be provided for delivering sugar in powder form (or other sweetener).

A station 30 (known per se) structurally different from the stations 20a, 20b, 20c and 20d can also be provided, for delivering a hot espresso coffee infusion, and comprising a vessel 31 for coffee beans, which feeds an underlying grinding device 32; this in its turn feeds a device 33 which produces with pressurized water an espresso coffee infusion which is delivered via an exit spout 35.

In the embodiment illustrated in the figures, the delivery stations 20a, 20b, 20c and 20d and 30 are mutually aligned along the rear vertical wall, their exit points (ie the lower opening of the exit spouts 25, 35 and 18) being mutually aligned along a straight line parallel to a first horizontal direction (parallel to the front wall).

Against the inner surface of the front wall 9a of the casing 9 there is provided a cup delivery station 40 (known per se) lying opposite the group of stations 20a, 20b, 20c and 20d. In the embodiment illustrated in the figures, the station 40 comprises a rotary magazine 41 able to contain several columns 81 of (plastic) cups 8. In the base of the station 40 there is provided a cup exit point 45, at which the cups project downwards, one at a time, from the base.

Preferably there is associated with the station 40 a station 46 (known per se) for delivering plastic sticks for stirring the drink.

According to the invention, there is provided a mixing device positioned specifically to the side of the delivery station 20a, and comprising a delivery means 51, by which the liquid component is delivered in the form of a jet emitted under pressure through at least one downwardly directed exit hole against the powder component mass.

In detail, the delivery means 51 comprises a vertical tube 510 the lower end of which is closed and presents at least one exit hole 52 for the liquid component.

In the embodiment shown in the figures, the means 51 also comprises means for vertically moving the vertical tube 510, specifically, a vertical rack 53 movable vertically along a vertical guide 54 fixed to a fixed frame 55; the rack 53 is engaged by a pinion 56, supported with its axis horizontal by the frame 55 and driven by a motor 561 (with encoder). The tube 510 is fixed to the rack 53 via a horizontal branch 531. On operating the motor 561, the rack 53 is moved vertically upwards or downwards, and with it the tube 510.

The upper end of the tube 510 is connected by a hose 511 to a feed pump 57 (particularly of positive displacement peristaltic type) connected in its turn to a source 58 of liquid component, for example a small vessel equipped with means for heating the liquid component provided in its interior. By means of the pump 57, the liquid component originating from the vessel 58 is fed under pressure into the tube 510 to leave through the holes 52 at a good rate.

The dispenser of the invention also comprises a cup handling device 60 having a gripping member 61 for gripping one cup 8 at a time, and means for moving the gripping member 61 in such a manner as to bring it to the various exit points of the delivery stations 20a, 20b, 20c, 20d, 19, 30, 40 and 50 by a succession of movements.

In the embodiment shown in the figures, the handling device comprises a carriage 65 slidable on parallel guides 66 having their axis extending along said first transverse horizontal direction. The movement is produced by a belt 68 passing endlessly about two pulleys 69, of which one is driven by a geared motor 70 (with encoder).

The carriage 65 carries a second carriage 72 which is movable, relative to the first carriage 65, in a second horizontal direction perpendicular to the first direction. The second carriage 72 carries the gripping member 61.

Specifically, the member 61 comprises a substantially horizontal shank 62, to the front end of which there is fixed a frontally open fork 63 in the form of a circular arc extending through an angle greater than 180 degrees, arranged to embrace and support a resting cup 8. In this respect, each cup 8 is of frusto-conical shape and comprises an upper rim 8a projecting radially outwards. The fork 63 has an inner diameter such as to embrace as an exact fit the outer surface of the cup, below the rim 8a, and to abut against this latter. In addition the front opening of the fork 63 is of such a size that the cup 8, by virtue of its elastic deformability, can be thrust into the fork by horizontal movement.

The first carriage 65 is substantially in the form of a profiled bar of U cross-section, within which the second carriage 72, in the from of a substantially parallelepiped block, slides. To the carriage 65 there is fixed parallel to the second direction a full-length rack 73 in which there engages a gearwheel 74 pivoted on a vertical axis to the carriage 72 and driven by a geared motor 75 (with encoder). When operated, the motor 75 causes the second carriage 72 to move in one direction or the other along the first carriage 65.

The rear end of the shank 62 is hinged to the second carriage 72 by a pin of transverse horizontal axis which enables the member 61 to swing in a vertical plane parallel to said second direction. At its front end the first carriage 65 carries a pair of wheels 76 for supporting the shank 62, which is hence supported when in its normal position both by the hinge on the carriage 72 and by the wheels 76, on which the lower surface of the shank 62 normally rests.

By virtue of the described means, the device 60 is hence able to carry the cup 8 into any point on the horizontal plane in which the carriage 72 moves, this being positioned below the exit points of the delivery stations 20a, 20b, 20c, 20d, 19, 30, 40 and 50 and below the delivery means 51.

The shank 62 also possesses on each of its side walls a profiled track 77 for receiving the support wheels 76, it defining a curved path of downwardly facing concavity, which opens at two points on the lower surface 62a, of which the front point is closed by a lower blade 78. The track 77 is shaped such that when the gripping member 61 has advanced to its front end position it undergoes a delayed lowering from its normal position. In contrast, when it withdraws from this advanced position, the gripping member 61 rises into its normal position only after a delay, so that its return path is different from and lower than its outward path.

This means that when the gripping member 61 has brought the cup 8 into its release location 10, it undergoes lowering so that while the cup rests on the base of the location the fork 63 continues to descend as far as the base of the cup; then when the member 61 is withdrawn rearwards, the fork 63 remains in its lowered position for a certain distance sufficient to enable the cup base (the diameter of which is less than the opening in the fork 63 and can hence escape freely from it) to withdraw completely from the fork 63. Specifically, the track 77 comprises two separate branches 77' and 77'', one of them being to the front of and considerably longer than the other, they joining the lower surface 62a of the shank 62 at two different points and both converging into the same rear point 771. The blade 78 is positioned at the point in which the front branch 77' opens into the lower surface 62a, and is such as to enable the relative wheel 76 to leave the branch 77' but to prevent its entry.

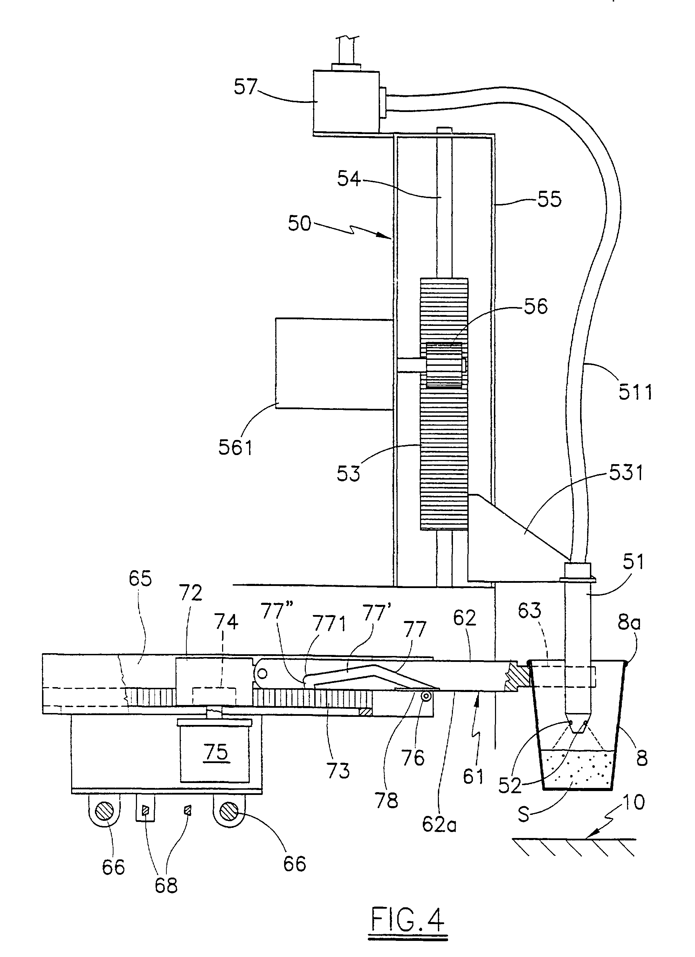

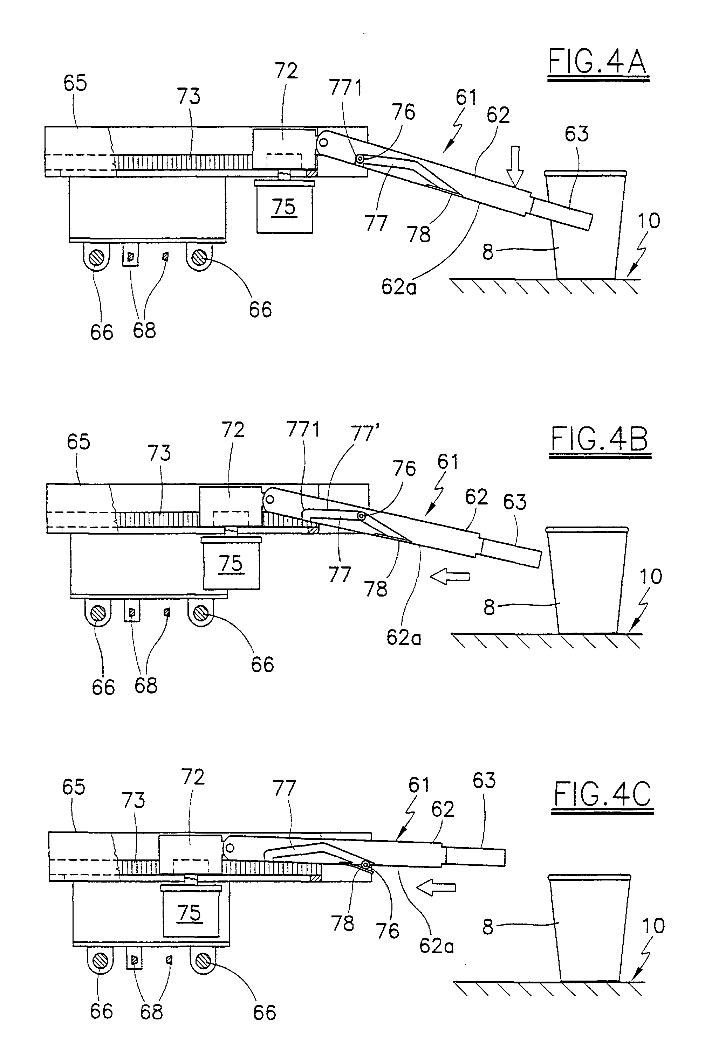

During operation, the wheels 76 normally rest against the lower surface 62a along that portion to the front of the track 77. Consequently the member 61 remains in a horizontal raised position. When however the member 61 is moved into its front end position, the wheel 76 firstly slides in contact with the lower surface 62a, then enters the rear branch 77''; on passing by the branch 77', the wheel 76 is unable to enter it as it is closed by the blade 78, which lies in a horizontal position and cannot be forced upwards (see Figure 4). When the member 61 reaches the front end position, the wheel 76 reaches the point 771, and the member 61 moves into its maximum lowered position (see Figure 4A). When the carriage 72 is pulled rearwards, the wheel 76 runs along the upper branch 77' and hence during withdrawal the member 61 remains lower than along its outward path, in which it travels along the branch 77'' (see Figure 4B). Finally, when the wheel reaches the end of the upper branch 77', it freely emerges from this because the blade 78 deflects downwards (see Figure 4C).

As in traditional dispensers, the automatic dispenser of the invention comprises an automatic electrical/electronic control unit (known per se and not shown in the figures) which, on insertion of a coin (or equivalent) and on the basis of the user's selections, controls the succession of operations required to deliver the requested drink to the user.

This automatic control unit automatically controls the powder emission and also the operation of the delivery means 51 and handling device 60, in a manner coordinated with the operation of the other dispenser members, on the basis of the selections made by the user.

According to the invention, if a drink based on a powder component present in a station 20a...20d is required, the device 60 firstly brings the gripping member 61 to the empty cup delivery station 40 in order to grip a cup, after which the cup 8 is brought by the device 60 below at least one exit point 25 of one of the delivery stations 20a...20a, where a measured quantity of the desired powder component is released directly into the cup. If required, the cut 8 is then brought below the exit point 18 of the sugar station 19.

The cup 8 is then brought by the device 60 into the mixing station 50 to below the tube 510 of the delivery means 51, where the control unit causes the liquid component to be delivered in the form of a fast jet emitted under pressure through one or more exit holes 52, directed against the powder component mass, to obtain the desired liquid drink. The exit holes of the delivery means 51 are maintained above the upper level of the substance S present in the cup while the liquid component is fed in.

In one embodiment of the invention, this step is effected by delivering the liquid component in the form of a fast jet emitted under pressure through each of the exit holes 52, directed against the powder component mass present in the cup 8; simultaneously, the exit holes 52 (which can be one or more than one in number) are maintained a short distance above the upper level of the substance S present in the cup 8, and, while the liquid component is being fed in with consequent increase in level, the tube 510 is raised relative to the cup 8, to maintain the holes 52 always at a short distance above the level, in particular such as to prevent the hole-containing lower end of the tube 510 from coming into contact with the substance or with its froth.

Preferably, during delivery of the liquid component, the cup 8 is moved within its plane relative to the axis of the tube 510, so that the jet of liquid component strikes different plan points of the substance present in the cup 8, while said exit holes are being continuously maintained a short distance above the level in the cup.

Said relative movements between the tube 510 and cup 8 are achieved by moving the gripping member 61 in the horizontal plane and moving the tube 510 along its vertical axis. In particular, the movements undergone by exit holes 52 relative to the cup 8 follow a helical path of polygonal plan, which follows the increase in level of the substance S present in the cup.

In an alternative embodiment of the invention, during the mixing in the station 50, the cup is moved within its plane relative to the hole 52 in the tube 510, so that the liquid component jet strikes different points, in plan, of the substance S present in the cup, whereas the exit hole 52 remains in a fixed position a short distance above the upper edge of the cup.

In this case the tube 510 is fixed, the described means 53, 54, 55, 56, 561 for moving the tube therefore not being provided; the dispenser structure is therefore simpler.

Preferably, only one exit hole 52 is provided.

The liquid component therefore strikes the powder component with one or more relatively thin and relatively fast jets which create considerable turbulence within the mass struck by them, this being initially powder then powder dissolved in the liquid,

Finally, the cup 8 carrying the drink is brought into the user release location 10, possibly after being brought below the stick delivery station 46.

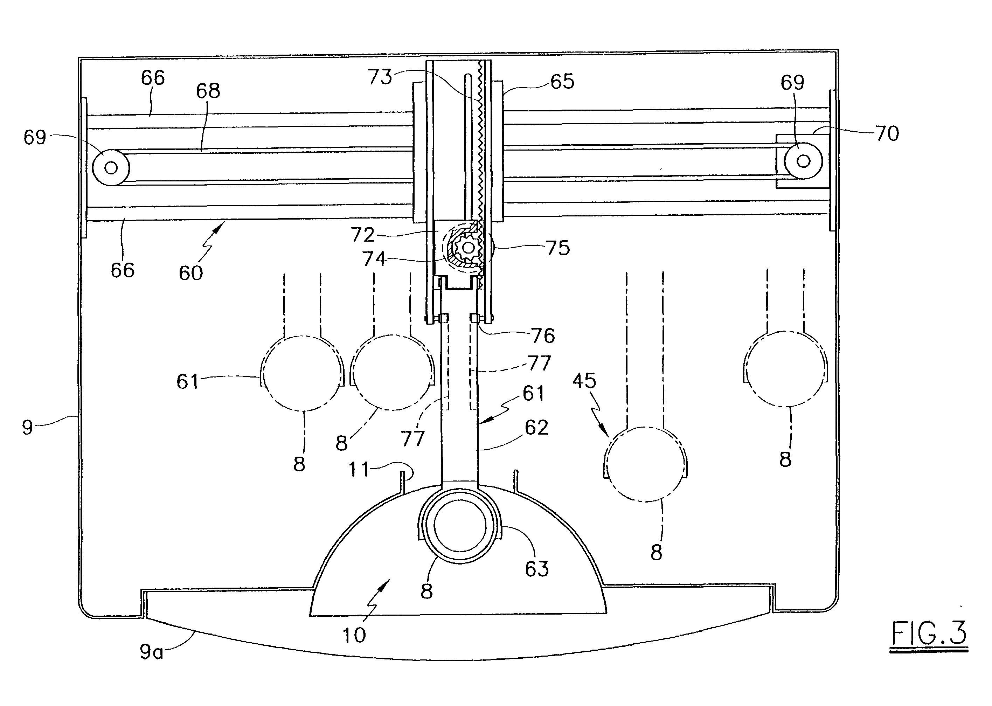

Figure 3 shows by dashed lines some possible positions assumed by the cup brought by the device 60 to below the delivery stations.

If the user requires a coffee, the cup 8 is brought directly from the station 40 to the station 30, possibly passing below the sugar delivery station 19.

By virtue of the invention, a light froth is also obtained, making the the appearance of the drink more attractive and its taste more pleasant.

Excellent mixing results have been obtained with a hole 52 of 0.6-1.1 mm diameter and a liquid component pressure of 3-5 bar.

The invention eliminates those elements which in the traditional art come into contact with the drink, in particular those devices for mixing the powder component with the liquid component, with consequent constructional simplification and improved hygiene both of the machine and of the delivered substances, and with a reduction in the operations required for cleaning those parts which come into contact with the drink.

Numerous modifications of a practical and applicational nature can be made to the invention, but without departing from the scope of the inventive idea as hereinafter claimed.

## Claims

1. A method for operating an automatic cupped drinks dispenser, the dispenser comprising a plurality of delivery stations (20a, ..., 20d) provided with vessels (21) containing respective components in powder form or the like, soluble in a liquid component, wherein:
firstly, a cup is brought to the exit point of at least one said delivery station (20a, ..., 20d), where a measured quantity of the component in powder form is released directly into the cup;
after this, the cup is moved into a mixing station (50) comprising a delivery means (51) for the liquid component, where the liquid component is delivered in the form of a fast jet emitted under pressure through at least one exit hole (52) directed against the powder component mass until the desired liquid drink is obtained, said exit hole (52) of the delivery means being maintained above the upper level of the substance (S) present in the cup while the liquid component is being fed in,
**characterised in that** during the delivery of the liquid component, the cup is moved within its plane relative to the axis of the delivery means (51), so that the liquid component jet strikes different plan points of the substance (S) present in the cup, whereas the exit hole (52) is raised relative to the cup, to always remain a short distance above the level of the substance under formation.

2. A method as claimed in claim 1, **characterised in that** the exit hole (52) undergoes, relative to the cup, a helical path which follows the increase in level of the substance (S) present in the cup.

3. An automatic cupped drinks dispenser, comprising:
a plurality of delivery stations (20a, ... 20d) provided with vessels (21) containing respective component materials in powder form or the like, soluble in a liquid component, each station being arranged to deliver the respective component material in the powder state;
an automatic control unit which automatically controls emission of the powder components;
a mixing station (50) having a means (51) for delivering the liquid component in the form of a jet emitted under pressure through at least one downwardly directed exit hole (52);
a cup handling device (60) comprising a gripping member (61) for gripping a cup, and means for moving said gripping member (61), said handling device (60) being controlled by the automatic control unit such that, in each operating cycle, the cup gripped by the gripping member (61) is brought into at least one delivery station (20a, ... 20d), where a measured quantity of desired powder component is released directly into the cup, the cup then being brought into the mixing station (50) below the action of the liquid component delivery means (51),
the exit hole of the delivery means (51) being maintained above the upper level of the substance (S) present in the cup while the liquid component is being fed in,
**characterised in that** during the delivery of the liquid component, the cup is moved within its plane relative to the axis of the delivery means (51), so that the liquid component jet strikes different plan points of the substance present in the cup, while the exit hole (52) is raised relative to the cup, to always remain a short distance above the level of the substance under formation.

4. An automatic dispenser as claimed in claim 3, **characterised in that** the exit hole (52) undergoes, relative to the cup, a helical path which follows the increase in level of the substance present in the cup.

5. An automatic dispenser as claimed in claim 3, **characterised in that** said handling device (60) is arranged to move the gripping member (61) within a horizontal plane, and possibly also comprises means for moving the delivery means (51) vertically, said means (51) being operated synchronously with the device (60) to produce the movement of the exit hole (52) relative to the cup.

6. An automatic dispenser as claimed in claim 3, **characterised in that** said liquid component delivery means (51) comprises a vertical tube (510) the lower end of which is closed and presents at least one exit hole (52) for the liquid component, its upper end being connected to a feed pump (57) connected in its turn to a source (58) of liquid component.

7. An automatic dispenser as claimed in claim 3, **characterised in that** said delivery means (51) comprises a vertical rack (53) carrying the tube (510) and movable vertically along a vertical guide (54) fixed to a fixed frame (55); the rack (53) being engaged by a pinion (56), supported with its axis horizontal by the frame (55) and driven by a motor (561), operation of the motor (561) causing the rack (53) to move vertically, and with it the tube (510).

8. An automatic dispenser as claimed in claim 3, **characterised in that** said cup handling device (60) comprises a first carriage (65) slidable in a first horizontal direction, and carrying a second carriage (72) which is movable, relative to the first carriage (65), in a second horizontal direction perpendicular to the first direction, and carrying the gripping member (61).

## Patentansprüche

1. Verfahren zum Betreiben eines Automaten zum Verteilen von Getränken in Becher, wobei der Ausgabeautomat eine Mehrzahl von Abgabestationen (20a,...,20d) umfasst, die mit Behältern (21) versehen sind, die die jeweiligen Zutaten in Pulverform oder dergleichen enthalten, die in einer Flüssigkeit löslich sind, wobei:
zunächst ein Becher zum Ausgang von mindestens einer Abgabestation (20a,...,20d) geführt wird, wo eine abgemessene Menge der Zutat in Pulverform direkt in den Becher freigegeben wird;
danach der Becher in eine Mischstation (50) bewegt wird, die eine Abgabevorrichtung für die Flüssigkeit (51) umfasst, wo die Flüssigkeit in Form eines festen Strahls unter Druck durch mindestens einen Auslaufstutzen (52) abgegeben wird, der auf die Pulverzutatenmasse gerichtet ist, bis das gewünschte flüssige Getränk erhalten wird, wobei der Auslaufstutzen (52) der Abgabevorrichtung während die Flüssigkeit zugeführt wird über dem oberen Niveau der Substanz (S) gehalten wird, die in dem Becher vorhanden ist,
**dadurch gekennzeichnet, dass**
der Becher auf seiner Ebene bezüglich der Achse der Abgabevorrichtung (51) während der Abgabe der Flüssigkeit bewegt wird, so dass der Flüssigkeitsstrahl verschiedene Planpunkte der Substanz (S) trifft, die in dem Becher vorhanden sind, wohingegen der Auslaufstutzen (52) bezüglich des Bechers angehoben wird, um immer in einem geringen Abstand über dem Niveau der zu bildenden Substanz zu bleiben.

2. Verfahren nach Anspruch 1,
**dadurch gekennzeichnet, dass**
der Auslaufstutzen (52) bezüglich des Bechers einen spiralförmigen Weg durchmacht, der dem Anstieg des Niveaus der Substanz (S), die in dem Becher vorhanden ist, folgt.

3. Automat zum Verteilen von Getränken in Becher, der Folgendes umfasst:
eine Mehrzahl von Abgabestationen (20a,...20d), die mit Behältern (21) versehen sind, die die jeweiligen Zutatenstoffe in Pulverform oder dergleichen enthalten, die in einer Flüssigkeit löslich sind, wobei jede Station so angeordnet ist, dass der jeweilige Zutatenstoff im Pulverstadium abgegeben wird;
eine automatische Steuereinheit, die automatisch die Ausgabe der Pulverzutaten steuert;
eine Mischstation (50), die eine Vorrichtung (51) zur Abgabe der Flüssigkeit in der Form eines Strahls, der unter Druck durch mindestens einen
nach unten gerichteten Auslaufstutzen (52) ausgestoßen wird, hat;
eine Becher-Handhabungsvorrichtung (60), die ein Greifelement (61) zum Greifen eines Bechers umfasst, und eine Vorrichtung zum Bewegen des Greifelements (61), wobei die Handhabungsvorrichtung (60) durch die automatische Steuereinheit gesteuert wird, so dass in jedem Arbeitszyklus der Becher, der von dem Greifelement (61) gegriffen wird, in mindestens eine Abgabestation (20a,...20d) geführt wird, wo eine abgemessene Menge der gewünschten Zutat in Pulverform direkt in den Becher freigegeben wird, wobei der Becher dann in die Mischstation (50) unter die Einwirkung der Vorrichtung zur Flüssigkeitsabgabe (51) geführt wird,
den Auslaufstutzen der Abgabevorrichtung (51), der über dem oberen Niveau der Substanz (S) gehalten wird, die in dem Becher vorhanden ist, während die Flüssigkeit zugeführt wird,
**dadurch gekennzeichnet, dass**
der Becher sich auf seiner Ebene bezüglich der Achse der Abgabevorrichtung (51) während der Abgabe der Flüssigkeit bewegt, so dass der Flüssigkeitsstrom verschiedene Planpunkte der Substanz (S) trifft, die in dem Becher vorhanden sind, wohingegen der Auslaufstutzen (52) der Abgabevorrichtung bezüglich des Bechers angehoben wird, um immer in einem geringen Abstand über dem Niveau der zu bildenden Substanz zu bleiben.

4. Ausgabeautomat nach Anspruch 3,
**dadurch gekennzeichnet, dass**
der Auslaufstutzen (52) bezüglich des Bechers einen spiralförmigen Weg durchmacht, der dem Anstieg des Niveaus der Substanz, die in dem Becher vorhanden ist, folgt.

5. Ausgabeautomat nach Anspruch 3,
**dadurch gekennzeichnet, dass**
die Handhabungsvorrichtung (60) angeordnet ist, um das Greifelement (61) auf einer horizontalen Ebene zu bewegen, und möglicherweise auch eine Vorrichtung zum vertikalen Bewegen der Abgabevorrichtung (51) umfasst, wobei die genannte Vorrichtung (51) gleichzeitig mit der Vorrichtung (60) betätigt wird, um die Bewegung des Auslaufstutzen (52) bezüglich des Bechers herzustellen.

6. Ausgabeautomat nach Anspruch 3,
**dadurch gekennzeichnet, dass**
die Abgabevorrichtung für die Flüssigkeit (51) ein vertikales Rohr (510) umfasst, dessen unteres Ende geschlossen ist und mindestens ein Auslaufstutzen (52) für die Flüssigkeit hat, dessen oberes Ende mit einer Zuführpumpe (57) verbunden ist, die ihrerseits mit einer Flüssigkeitsquelle (58) verbunden ist.

7. Ausgabeautomat nach Anspruch 3,
**dadurch gekennzeichnet dass**
die Abgabevorrichtung (51) eine vertikale Halterung (53) umfasst, die das Rohr (510) trägt und vertikal entlang einer vertikalen Führung (54) beweglich ist, die an einem feststehenden Rahmen (55) befestigt ist;
die Halterung im Eingriff mit einem Ritzel (56) steht, das mit seiner horizontalen Achse durch den Rahmen (55) getragen und durch einen Motor (561) angetrieben wird, wobei die Betätigung des Motors (561) die Halterung und mit ihr das Rohr (510) dazu veranlasst, sich vertikal zu bewegen

8. Ausgabeautomat nach Anspruch 3,
**dadurch gekennzeichnet, dass**
die Becher-Handhabungsvorrichtung (60) einen ersten Schlitten (65) umfasst, der in eine erste horizontale Richtung gleitet und einen zweiten Schlitten (72) trägt, der bezüglich des ersten Schlittens (65) in eine zweite horizontale Richtung beweglich ist, die senkrecht zu der ersten Richtung ist, und das Greifelement (61) trägt.

## Revendications

1. Procédé de commande d'un distributeur automatique de boissons en gobelets, le distributeur comprenant plusieurs postes de distribution (20a,... 20d) ayant des réservoirs (21) contenant des ingrédients respectifs sous forme de poudres et analogues, solubles dans un ingrédient liquide, dans lequel :
d'abord, un gobelet est disposé au point de sortie d'au moins un poste de distribution (20a,... 20d) auquel une quantité mesurée de l'ingrédient sous forme de poudre est directement libérée dans le gobelet,
ensuite, le gobelet est déplacé à un poste de mélange (50) qui comporte un dispositif (51) de distribution de l'ingrédient liquide, auquel l'ingrédient liquide est distribué sous forme d'un jet rapide et est mis sous pression par au moins un trou de sortie (52) dirigé contre la masse de l'ingrédient en poudre jusqu'à ce que la boisson liquide voulue soit obtenue, le trou de sortie (52) du dispositif de distribution étant maintenu au-dessus du niveau supérieur de la substance (S) présente dans le gobelet pendant que l'ingrédient liquide est transmis à l'intérieur,
**caractérisé en ce que**, pendant la distribution de l'ingrédient liquide, le gobelet est déplacé dans un plan par rapport à l'axe du dispositif de distribution (51) de manière que le jet d'ingrédient liquide frappe différents points dans le plan de la substance (S) présente dans le gobelet, alors que le trou de sortie (52) est élevé par rapport au gobelet afin qu'il reste toujours à une petite distance au-dessus du niveau de la substance en cours de formation.

2. Procédé selon la revendication 1, **caractérisé en ce que** le trou de sortie (52) décrit, par rapport au gobelet, un trajet hélicoïdal qui suit l'élévation de niveau de la substance (S) présente dans le gobelet.

3. Distributeur automatique de boissons en gobelets, comprenant :
plusieurs postes de distribution (20a,... 20d) ayant des réservoirs (21) contenant des ingrédients respectifs sous forme de poudres ou analogues, solubles dans un ingrédient liquide, chaque poste étant disposé afin qu'il distribue l'ingrédient respectif à l'état de poudre,
une unité de commande automatique qui commande automatiquement l'émission des ingrédients en poudre,
un poste de mélange (50) ayant un dispositif (51) de distribution de l'ingrédient liquide sous forme d'un jet émis sous pression par au moins un trou de sortie (52) dirigé vers le bas, et
un dispositif (60) de manutention de gobelets, ayant un organe de saisie (61) destiné à saisir un gobelet, et un dispositif de déplacement de l'organe de saisie (61), le dispositif de manipulation (60) étant commandé par l'unité de commande automatique afin que, à chaque cycle de fonctionnement, le gobelet saisi par l'organe de saisie (61) soit placé à au moins un poste de distribution (20a,... 20d) auquel une quantité mesurée de l'ingrédient voulu en poudre est libérée directement dans le gobelet, le gobelet étant placé au poste de mélange (50) sous l'action du dispositif (51) de distribution d'ingrédient liquide, le trou de sortie du dispositif de distribution (51) étant maintenu au-dessus du niveau supérieur de la substance (S) présente dans le gobelet lorsque l'ingrédient liquide est introduit,
**caractérisé en ce que**, pendant la distribution de l'ingrédient liquide, le gobelet est déplacé dans son plan par rapport à l'axe du dispositif de distribution (51) afin que le jet d'ingrédient liquide frappe différents points dans le plan de la substance présente dans le gobelet, alors que le trou de sortie (52) est soulevé par rapport au gobelet afin qu'il reste toujours à une petite distance au-dessus du niveau de la substance en cours de formation.

4. Distributeur automatique selon la revendication 3, **caractérisé en ce que** le trou de sortie (52) décrit, par rapport au gobelet, un trajet en hélice qui suit l'élévation de niveau de la substance présente dans le gobelet.

5. Distributeur automatique selon la revendication 3, **caractérisé en ce que** le dispositif de manipulation (60) est disposé afin qu'il déplace l'organe de saisie (61) dans un plan horizontal, et comporte aussi éventuellement un dispositif de déplacement vertical du dispositif de distribution (51), ce dispositif (51) étant commandé en synchronisme avec le dispositif (60) de manipulation pour la production du mouvement du trou de sortie (52) par rapport au gobelet.

6. Distributeur automatique selon la revendication 3, **caractérisé en ce que** le dispositif de distribution (51) de l'ingrédient liquide comporte un tube vertical (510) dont l'extrémité inférieure est fermée et présente au moins un trou de sortie (52) de l'ingrédient liquide, son extrémité supérieure étant raccordée à une pompe d'alimentation (57) raccordée à son tour à une source (58) de l'ingrédient liquide.

7. Distributeur automatique selon la revendication 3, **caractérisé en ce que** le dispositif de distribution (51) comporte une crémaillère verticale (53) portant le tube (510) mobile verticalement le long d'un guide vertical (54) fixé par un châssis fixe (55),
la crémaillère (53) étant en prise avec un pignon (56) supporté avec son axe horizontal par le châssis (55) et entraîné par un moteur (561), le fonctionnement du moteur (561) provoquant le déplacement vertical de la crémaillère (53) et du tube (510) avec elle.

8. Distributeur automatique selon la revendication 3, **caractérisé en ce que** le dispositif de manipulation (60) de gobelet comprend un premier chariot (65) qui peut coulisser dans une première direction horizontale et portant un second chariot (72) qui est mobile, par rapport au premier chariot (65), dans une seconde direction horizontale perpendiculaire à la première direction, et portant l'organe de saisie (61).
